# EUROPEAN PATENT APPLICATION

(11) **EP 4 749 149 A1**
(43) Date of publication of application: **27.05.2026**
(21) Application number: 24425055.1
(22) Date of filing: 26.11.2024
(51) Int. Cl.: F16C 19/18, F16C 33/38, F16C 41/00

(54) **ROLLING BEARING AND RELATIVE METHOD AND INSPECTION SYSTEM**

(71) Applicant: Leonardo S.p.a., 00195 Roma (IT)
(72) Inventor: D'Andrea, Andrea, 21017 SAMARATE (VA) (IT); Delli Paoli, Michele, 21017 SAMARATE (VA) (IT); Anaclerio, Mario, 21017 SAMARATE (VA) (IT)
(74) Representative: Studio Torta S.p.A.

(57) **Abstract**

A rolling bearing (20) for a helicopter (1) is described, comprising a first ring (21) extending around an axis (A) and a second ring (22) extending around the axis (A) and radially external to the first ring (20). The rolling bearing (20) further comprises a plurality of rolling bodies (23, 24) cooperating with said first and second rings (21, 22), so as to roll on respective raceways (25, 26, 27, 28) of said first and second rings (21, 22) and to allow the relative rotation between the first and the second ring (21, 22) around the axis (A); and a cage (29) configured to maintain the rolling bodies (23, 24) angularly distanced from each other around the axis (A). The cage (29) comprises a cavity (30) configured to be selectively engaged by a sensor (50); and facing the first ring (21) and/or the second ring (22).

## Description

The present invention relates to a rolling bearing and to a relative inspection system. The present invention also relates to an inspection method of a rolling bearing.

As known, helicopters essentially comprise a fuselage and a rotor positioned at the top of the fuselage and rotating around a first axis.

The rotor, in turn, comprises a control mast rotating around the first axis, a hub dragged in rotation by the control mast and a plurality of blades constrained projecting to the hub and extending radially with respect to the first axis.

Helicopters of the known type also comprise a regulation system configured to regulate the modulus and the direction of the thrust generated by the rotor.

More specifically, the regulation system performs two primary functions:
- under the action of a flight command known as "collective pitch", it simultaneously varies the "pitch angle" of all the rotor blades, so as to regulate the modulus of the thrust generated by the rotor itself; and
- under the action of a flight command known as "cyclic pitch", it individually and cyclically varies the pitch angle of the rotor blades during their rotation around the first axis.

The regulation system essentially comprises:
- a non-rotating "swashplate", which is angularly fixed with respect to the first axis, is free to translate parallel to the first axis, and is free to oscillate with respect to a fulcrum around a second longitudinal axis of the helicopter and a third axis, which is orthogonal to the first and to the second axis; and
- a rotating swashplate, which rotates around the first axis integrally with the control mast, is free to translate parallel to the first axis integrally with the non-rotating swashplate, and is free to oscillate around said fulcrum around the second axis and the third axis integrally with the non-rotating swashplate.

The rotating swashplate is connected to the blades by means of respective piston rods in an eccentric position with respect to the direction of longitudinal extension of the extended blades.

The helicopters further comprise:
- a first set of actuators controlled by the "collective pitch" flight command, and operatively connected to the non-rotating swashplate so as to determine its translation along the first axis and consequently to vary the collective pitch of the blades; and
- a second set of actuators controlled by the "cyclic pitch" flight command, and operatively connected to the non-rotating swashplate so as to determine its inclination with respect to the fulcrum and around the second axis and the third axis defining between them an oscillation plane and consequently to vary the cyclic pitch of the blades.

Thanks to control of the cyclic pitch of the blades and to the fact that the swashplate can be inclined on a plane, it is thus possible to incline the rotor disc on the plane defined by the second axis and by the third axis, i.e. longitudinally and laterally with respect to the direction of longitudinal advancement of the helicopter. The inclination of the rotor disc therefore allows the direction of application of the thrust of the rotor itself to be regulated.

The regulation system further comprises a rolling bearing interposed radially between the rotating swashplate and the non-rotating swashplate radially with respect to the first axis and configured to allow the relative rotation thereof.

Said rolling bearing is a critical component of the helicopter, since it contributes to manoeuvrability of the helicopter and to its support and damage to or a fault on the rolling bearing could trigger catastrophic events. It is therefore of fundamental importance to check that the rolling bearing functions correctly.

In detail, it has been observed that, of the various types of damage to which rolling bearings are generally subject, scratching or chipping (known as *"spalling*") is of particular relevance. In particular, spalling of the raceways of the bearings causes the detachment of metal fragments, which tend to cause the start of cracks or structural failures in the bearing, with potentially catastrophic consequences for the entire aircraft.

In order to obviate the aforesaid problems of damage and to guarantee that the regulation system is as robust as necessary, it is common to use rolling bearings designed for infinite life and to periodically perform a maintenance procedure to assess the level of roughness of the raceways.

This maintenance procedure is usually performed by a specialised operator, who places the rotating swashplate in rotation with respect to the non-rotating swashplate in order to manually identify the presence of any vibrations. In detail, the operator places his hands on the arms of the swashplates and determines a level of roughness of the raceways as a function of the extent of the vibrations perceived.

There is room for numerous improvements in this maintenance procedure. The assessment performed by the operator during performance of the maintenance procedure does, in fact, have a subjective component and the result of such assessment could depend on the degree of experience of the operator himself. For this reason, the maintenance procedure can only be performed by expert and certified operators.

In addition, during the maintenance procedure, the operator performs only an indirect control on the bearing, which is possible by virtue of the fact that the vibrations of the rolling bearing propagate through the swashplates and the components adjacent to them.

Furthermore, it is possible that, when the vibrations due to damage of the rolling bearing are sufficiently perceivable by the operator, the damage to the rolling bearing is already considerable.

There is therefore a need in the sector to identify a strategy for detection of any damage to the rolling bearing that does not have the drawbacks of the manual maintenance procedure.

An object of the invention is to respond to the above need, preferably in a simple and economical way.

The aforesaid object is achieved by the present invention, as it relates to a rolling bearing, as defined in claim 1.

The aforesaid object is also achieved by an inspection system for a rolling bearing, as defined in claim 8, and by an inspection method of a rolling bearing, as defined in claim 11.

For a better understanding of the present invention, a preferred and non-limiting embodiment is described below, by way of example, with reference to the appended drawings, wherein:
- Figure 1 is a perspective view of a helicopter comprising a rolling bearing manufactured according to the dictates of the present invention;
- Figure 2 is a perspective view of a regulation system of the helicopter of Figure 1 comprising said rolling bearing and with parts removed for clarity;
- Figure 3 is a perspective cutaway view of the regulation system of Figure 2 and showing the rolling bearing;

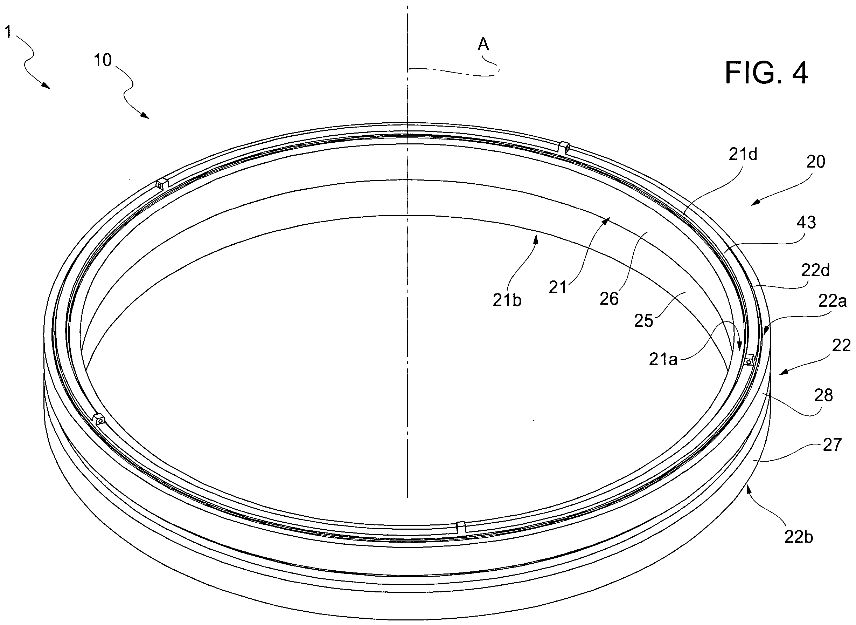

- Figure 4 is a perspective view of the rolling bearing of Figures 1 to 3;
- Figure 5 is an exploded view of the rolling bearing of Figure 4;
- Figure 5A is a detailed view on an enlarged scale of a portion of the bearing shown in Figure 5;
- Figure 6 is a partial and perspective view of the rolling bearing of Figures 4 and 5 during a step of an inspection method according to the present invention;
- Figure 7 is a perspective cutaway view along the plane VII-VII of Figure 6; and
- Figure 8 is a further detailed view on an enlarged scale of a portion of the rolling bearing during the step of the inspection method shown in Figures 6 and 7, with parts removed for clarity.

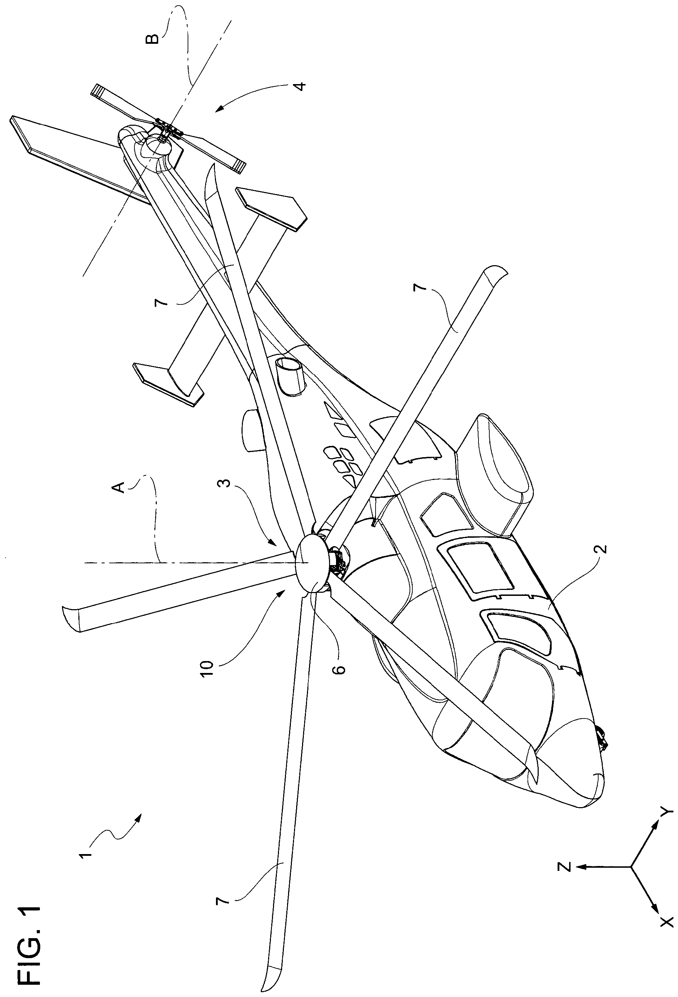

With reference to Figure 1, the number 1 denotes an aircraft capable of hovering. In the non-limiting embodiment shown, the aircraft is a helicopter.

In the description that follows, expressions such as "front", "rear", "upper" and "lower" are used in reference to a normal advanced direction of flight and functioning position of the helicopter 1 shown in the appended figures. It is also possible to define a reference system integrally with said helicopter 1 and comprising (Figure 1):
- a longitudinal axis X;
- a transverse axis Y, which is orthogonal to the axis X; and
- an axis Z orthogonal to the axes X and Y and directed vertically to the ground during a normal condition of use of the helicopter 1.

The helicopter 1 comprises:
- a fuselage 2;
- a main rotor 3 positioned at the top of the fuselage 2 and rotating around an axis A; and
- an anti-torque rotor 4 positioned at a tail-end of the fuselage 2 and rotating around its own axis B, which is transversal to the axis A.

The rotor 3 comprises, in turn:
- a control mast - not shown - rotating around the axis A;
- a hub 6 dragged in rotation by the control mast; and
- a plurality of blades 7 jointed on the hub 6 and extending radially to the axis A.

The helicopter 1 further comprises a regulation system 10 configured to regulate the modulus and the direction of the thrust generated by the rotor 3. In a known way, the regulation system 10 is configured to:
- simultaneously vary the pitch angle of all the blades 7, so as to regulate the modulus of the thrust generated by the rotor 3; and
- individually and cyclically vary the pitch angle of the blades 7 during their rotation around the axis A.

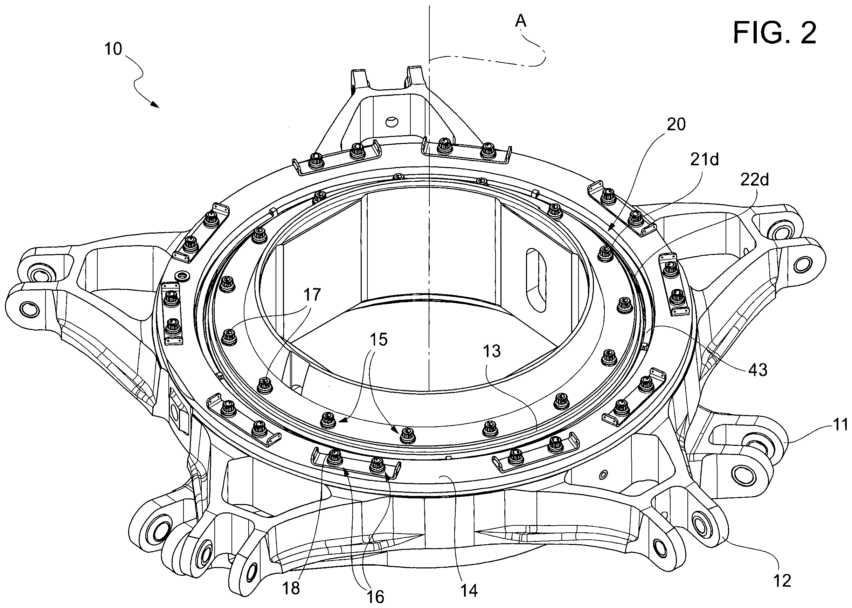

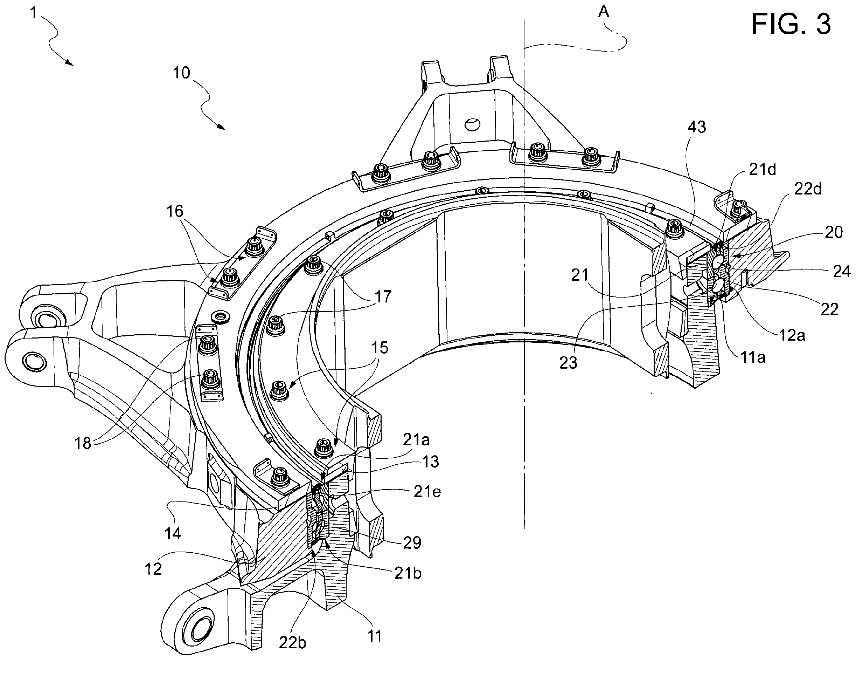

The regulation system 10 comprises, in turn (Figures 2 and 3):
- a non-rotating swashplate 11, which is angularly fixed with respect to the axis A, is free to translate parallel to the axis A, and is free to oscillate with respect to a fulcrum around a longitudinal axis of the helicopter 1 and a further axis, which is orthogonal to the axis A and to the longitudinal axis; and
- a rotating swashplate 12, which rotates around the axis A integrally with the control mast, is free to translate parallel to the axis A integrally with the non-rotating swashplate 11, and is free to oscillate around said fulcrum around the longitudinal axis and the further axis integrally with the non-rotating swashplate 11.

The rotating swashplate 12 is connected to the blades 7 by means of respective piston rods - not shown - arranged in an eccentric position with respect to the direction of longitudinal extension of the blades 7.

The swashplate 11 and the swashplate 12 both comprise a respective plurality of holes - not shown - directed parallel to the axis A. Preferably, said holes are blind and at least partially threaded.

The regulation system 10 further comprises (Figures 2 and 3):
- a ring 13 arranged concentrically to the axis A and superimposed on the swashplate 11 on the side of the blades 7;
- a ring 14 arranged concentrically to the axis A, radially external to the ring 13 and superimposed on the swashplate 12 on the side of the blades 7;
- a plurality of holes 15 parallel to the axis A and obtained at the ring 13;
- a plurality of holes 16 parallel to the axis A and obtained at the ring 14;
- a plurality of threaded connection elements 17, each engaging a respective hole 15 and a respective hole of the swashplate 11; and
- a plurality of threaded connection elements 18, each engaging a respective hole 16 and a respective hole of the swashplate 12.

The regulation system 10 further comprises a rolling bearing 20, which is interposed between the swashplates 11 and 12 radially with respect to the axis A and allows their relative rotation (Figure 3).

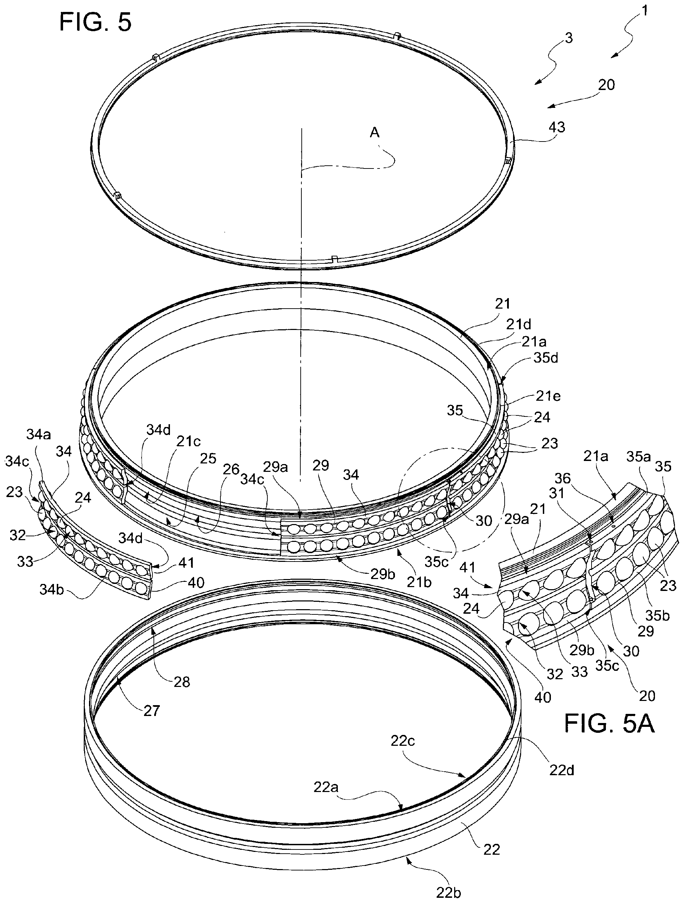

The rolling bearing 20 comprises (Figure 5):
- a ring 21 extending around the axis A;
- a ring 22 extending around the axis A and radially external to the ring 20;
- a plurality of rolling bodies 23, 24 cooperating with the rings 21 and 22, so as to roll on respective raceways 25, 26, 27, 28 of the rings 21 and 22 and allow the relative rotation between the rings 21, 22 around the axis A;
- a cage 29 configured to maintain the rolling bodies 23, 24 angularly distanced from each other around the axis A.

In detail, the ring 21 comprises the raceways 25 and 26, which are superimposed on each other parallel to the axis A; the ring 22 comprises the raceways 27 and 28, which are superimposed on each other parallel to the axis A. In further detail, the raceways 25 and 27 are aligned with each other orthogonally to the axis A; similarly, the raceways 26 and 28 are aligned with each other orthogonally to the axis A.

As shown in Figure 5, the rolling bearing 20 comprises a first crown 40 of rolling bodies 23 and a second crown 41 of rolling bodies 24 distanced from each other parallel to the axis A. In detail, the rolling bodies 23 are adapted to roll on the raceway 25 and on the raceway 27; the rolling bodies 24 are adapted to roll on the raceway 26 and on the raceway 28.

In detail, the rolling bodies 23, 24 are spherical and are identical to each other. Preferably, furthermore, the rolling bodies 23, 24 are in a metal or ceramic material.

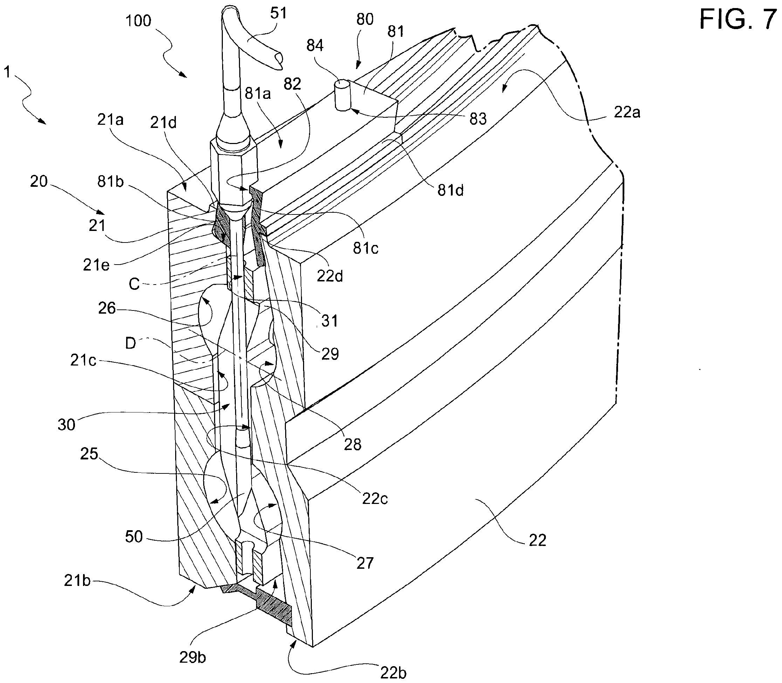

As shown in Figure 7, the ring 21 comprises two surfaces 21a and 21b arranged opposed to each other parallel to the axis A. In detail, these surfaces 21a and 21b are flat, directed orthogonally to the axis A and extend along the entire circumferential extension of the ring 21 with respect to the axis A. Similarly, the ring 22 comprises two surfaces 22a and 22b arranged opposed to each other parallel to the axis A. In detail, the surfaces 22a and 22b are flat, directed orthogonally to the axis A and extend along the entire circumferential extension of the ring 22 with respect to the axis A.

In addition, the rings 21 and 22 comprise respective faces 21c, 22c parallel to the axis A and facing each other radially with respect to the axis A. In detail, the raceways 25 and 26 are arranged at the face 21c and the raceways 27 and 28 are arranged at the face 22c.

The ring 21 further comprises an edge 21d, which protrudes from the surface 21a parallel to the axis A from the opposite side to the surface 21b, i.e. towards the blades 7. The edge 21d extends along the entire circumferential extension of the ring 21 around the axis A.

The ring 22 also comprises an edge 22d, which protrudes from the surface 22a parallel to the axis A from the opposite side to the surface 22b, i.e. towards the blades 7. The edge 22d extends along the entire circumferential extension of the ring 22 around the axis A and is arranged at the face 22c.

In detail, proceeding parallel to the axis A in the direction oriented from the surfaces 21b, 22b to the surfaces 21a, 22a, the distance between the points of the edge 21d and the edge 22d in a radial direction with respect to the axis A progressively diminishes (Figure 7).

The ring 21 also comprises a surface 21e, which extends at the face 21c along the entire circumferential extension of the ring 21 around the axis A. In detail, the surface 21e is interposed between the surface 21a and the raceway 26 parallel to the axis A.

As shown in Figure 3, the ring 21 is integral with the swashplate 11 and the ring 22 is integral with the swashplate 12.

In detail, the surfaces 21a and 22a are in abutment respectively against the rings 13 and 14 and are pressed by them; the surface 21b is in abutment against a shoulder 11a of the swashplate 11 and the surface 22b is in abutment against a shoulder 12a of the swashplate 12. In further detail, the rings 13 and 14 provide an axial preload to the rolling bearing 20.

The cage 29 is movable around the axis A with respect to the rings 21 and 22. Furthermore, as shown in Figures 5 and 5A, the cage 29 has the shape of a ring centred with respect to the axis A and comprises:
- two ends 29a, 29b opposite to each other parallel to the axis A;
- a plurality of alveoli 32, each housing a respective rolling body 23; and
- a plurality of alveoli 33, each housing a respective rolling body 24.

The alveoli 32, 33 are passing through the cage 29 in a radial direction with respect to the axis A and have a shape corresponding with the one of the rolling bodies 23, 24. In addition, the alveoli 32 are aligned with each other orthogonally to the axis A and angularly equally spaced from each other with respect to the axis A; the alveoli 33 are also aligned with each other orthogonally to the axis A, angularly equally spaced from each other with respect to the axis A and distanced from the alveoli 32 along the axis A. In addition, the alveoli 32 are arranged on the side of the end 29b and the alveoli 33 are arranged on the side of the end 29a.

In detail, the cage 29 is divided into a plurality of angular sectors 34, 35 positioned alongside each other in a circumferential arrangement around the axis A. Each sector 34, 35 comprises a respective plurality of alveoli 32 and 33.

In detail, each sector 34 comprises, in turn:
- a body 34a arranged on the side of the end 29a and comprising alveoli 33;
- a body 34b arranged on the side of the end 29b and comprising alveoli 32.

In particular, the bodies 34a and 34b of each sector 34 are separate from each other and aligned with each other in the circumferential direction around the axis A.

The sector 35 is similar to the sector 34 and will be described in detail below.

Preferably, furthermore, the cage 29 is made from a phenolic resin. Nevertheless, the cage 29 could also be made from a different material to a phenolic resin.

The rolling bearing 20 also comprises a gasket 43 interposed between the ring 21 and the ring 22 radially with respect to the axis A during functioning of the rolling bearing 20. The gasket 43 extends along the entire extension of the rolling bearing 20 in the circumferential direction with respect to the axis A. In a known way, the gasket 43 is configured to prevent the leakage of lubricant from the rolling bearing 20 and the entry of external bodies, such as debris, dust and dirt.

As shown in Figure 3, the gasket 43 is in abutment against the edges 21d and 22d and rested on the surface 21e.

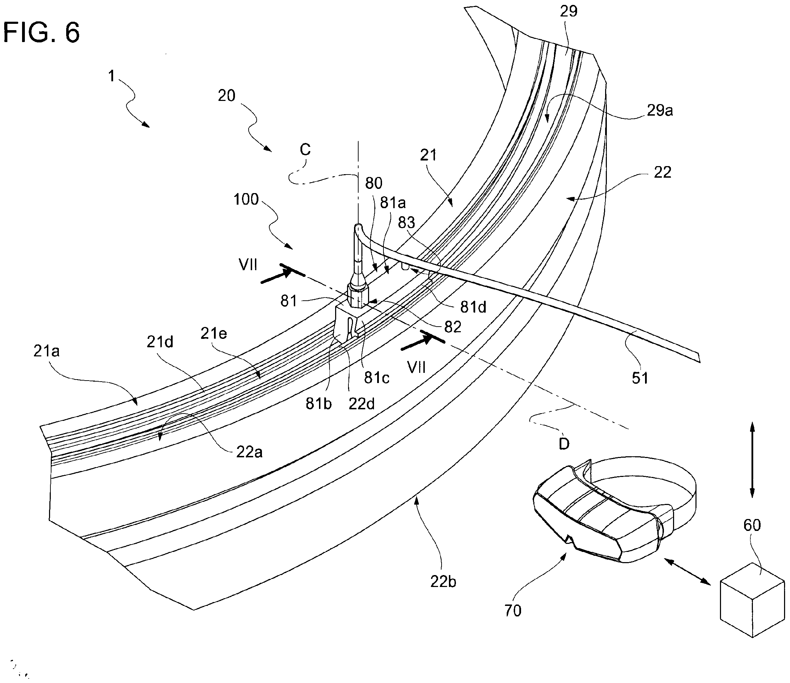

The present invention also relates to an inspection system 100 for the rolling bearing 20, which comprises a sensor 50 and an electronic control unit 60 operatively connected to the sensor 50 (Figure 6). In the embodiment shown, the inspection system 100 comprises an electric and/or optical cable 51, which electrically connects the sensor 50 to the electronic control unit 60.

The inspection system 100, as a whole, could be separate from the helicopter 1 or could be part of the helicopter 1; alternatively, the electronic control unit 60 alone could be part of the helicopter 1.

Advantageously, the cage 29 comprises a cavity 30 configured to be selectively engaged by the sensor 50 during an inspection step and arranged so as to be facing the ring 21 and the ring 22 (Figure 7).

The fact of the cavity 30 facing the ring 21 and the ring 22 is intended to mean that it is passing through the cage 29 radially with respect to the axis A. In detail, the cavity 30 is passing from the part of the cage 29 turned towards the ring 21 to the part turned towards the ring 22. In further detail, the cavity 30 is directly facing the raceways 25, 26, 27 and 28.

As shown in Figures 5 and 5A, the cage 29 comprises a single sector 35, which is interposed between the two sectors 34 angularly with respect to the axis A. The sector 35 comprises:
- a body 35a arranged on the side of the end 29a and comprising alveoli 33;
- a body 35b arranged on the side of the end 29b and comprising alveoli 32.

In particular, the bodies 35a and 35b of the sector 35 are joined to each other and aligned with each other in the circumferential direction around the axis A.

Each sector 34, 35, further comprises respective ends 34c, 34d; 35c, 35d opposite to each other angularly with respect to the axis A. In detail, the end 35c of the sector 35 is facing and/or alongside the end 34d of an adjacent sector 34 and the end 35d of the sector 35 is facing and/or alongside the end 34c of another adjacent sector 34 (Figure 5).

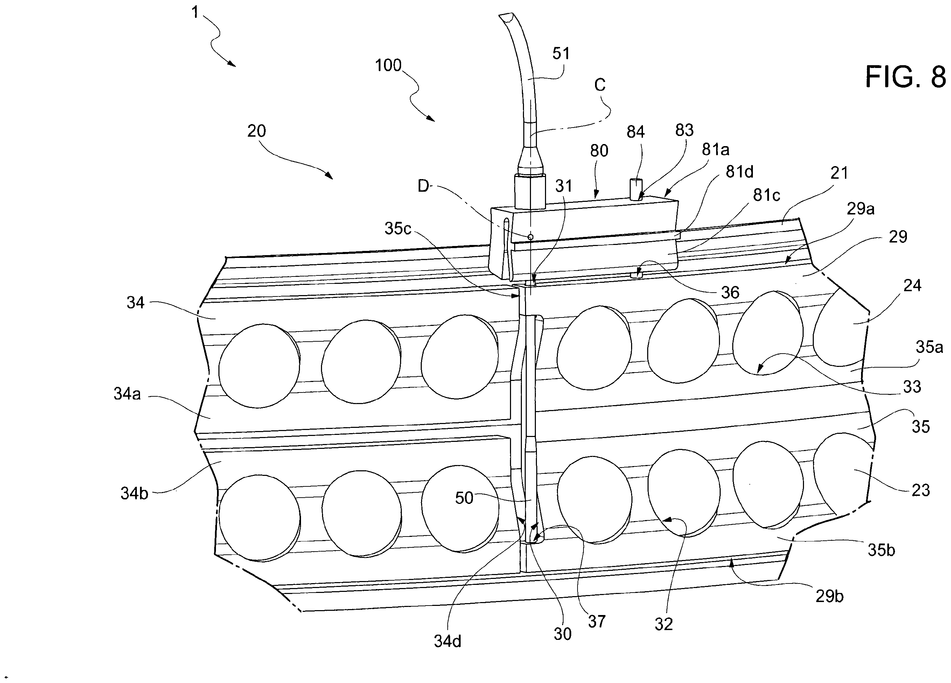

As shown in Figure 8, the cavity 30 is arranged at the end 35c of the sector 35. In particular, the cavity 30 extends between the end 35c and the alveoli 32, 33 of the sector 35 in the circumferential direction with respect to the axis A. In other words, the cavity 30 is a notch.

In detail, the cavity 30 extends parallel or substantially parallel to the axis A. In more detail, the cavity 30 is distanced from the end 29a and from the end 29b parallel to the axis A.

In addition, the cavity 30 extends in part at the body 35a and in part at the body 25b.

Preferably, the cavity 30 has a rectangular or substantially rectangular shape on a plane tangential to the cage 29 (Figure 8).

As shown in Figures 7 and 8, the cage 29 comprises an opening 31 extending from the end 29a to the cavity 30. Said opening 31 is configured to allow access of the sensor 50 to the cavity 30.

In detail, the opening 31 is circular and extends parallel to the axis A.

Preferably, the cage 29 also comprises (Figure 8):
- a blind opening 36, parallel to the axis A and arranged on the side of the end 29a, and
- an opening 37 extending from the end 29b to the cavity 30.

Advantageously, the sensor 50 is configured to detect a dimensional quantity associated with the raceways 25, 26, 27, 28 and/or to acquire images of the raceways 25, 26, 27, 28.

The sensor 50 is also configured to generate a signal correlated with the dimensional quantity and/or the images acquired.

In particular, the dimensional quantity detected by the sensor 50 is a quantity relating to the surfaces of the raceways 25, 26, 27, 28. For example, the dimensional quantity coincides with or is correlated to the surface roughness of the raceways 25, 26, 27, 28.

The sensor 50 comprises one or more among a video camera, a profilometer, an interferometer and a microscope.

Preferably, the electronic control unit 60 is configured to receive the signal generated by the sensor 50 and to determine the presence of damage to the rolling bearing 20 on the basis of said signal. In detail, the electronic control unit is configured to:
- process the quantity detected and/or the images acquired by the sensor 50 in order to classify them in one or more classes; and
- determine the presence of damage to the rolling bearing 20 on the basis of the classification of the dimensional quantity and/or the images acquired in one or more classes.

By way of example, the classes comprise:
- a first class indicative of the presence of damage to the rolling bearing 20; and
- a second class indicative of the absence of damage to the rolling bearing 20.

In further detail, the electronic control unit 60 is configured to classify the quantity detected and/or the images acquired by the sensor 50 by means of a control criterion. For example, the control criterion provides for the quantity detected being lower or higher than one or more threshold values.

Alternatively, the electronic control unit 60 is configured to classify the quantities detected and/or the images acquired by the sensor 50 by means of a classification model. In particular, said classification model is determined and applied by a machine learning algorithm loaded and executable by the electronic control unit 60. Preferably, the machine learning algorithm is of the proprietary type.

According to a preferred embodiment, the inspection system 100 also comprises viewing means 70 wearable by an operator and operatively connected to the electronic control unit 60. Said viewing means 70 are configured to show the operator the images acquired, the dimensional quantities detected by the sensor 60 and/or information correlated with them.

By way of example, the viewing means 70 comprise augmented reality viewers or mixed reality viewers.

The inspection system 100 also comprises a device 80 adapted to guide the insertion of the sensor 50 and/or the electric cable 51 into the cavity 30 (Figures 6 to 8).

The device 80 comprises, in turn:
- a body 81 adapted to be operatively connected to the cage 29 during an inspection step of the rolling bearing 20; and
- a hole 82 passing through the body 81 along a direction C and adapted to be at least partially aligned with the opening 31.

In detail, the body 81 has a parallelepiped or substantially parallelepiped shape. More in detail, the body 81 has the shape of a circular crown sector on an orthogonal plane to the direction C.

In detail, the body 81 comprises (Figure 7):
- a flat surface 81a orthogonal or substantially orthogonal to the direction C; and
- two portions 81b and 81c, which protrude from the surface 81a parallel to the direction C and distanced from each other along a direction D orthogonal to the direction C.

In other words, the body 81 has the shape of an inverted U shape (Figure 8).

The body 81 is also made from an elastically deformable material (for example, from polyamide or from rubber). In detail, applying pressure to the portions 81b and 81c, it is possible to bring them closer to each other in a reversible way.

In the embodiment shown, the extension of the portion 81b along the direction D is greater (for example, double or triple) than the extension of the portion 81c along the same direction D.

In further detail, considering a section of the body 81 according to a plane passing along directions C and D and proceeding in the direction oriented by the surface 81a to the portions 81b, 81c, the extension of the body 81 along the direction D first decreases progressively and then increases progressively. In other words, considering the aforesaid plane passing along the directions C and D, the transverse section of the body 81 has the shape of an hourglass.

The body 81 also comprises an edge 81d, which protrudes from the portion 81c on the opposite side to the portion 81b along the direction D. In detail, the edge 81d has a rectangular section on a plane passing along the directions C and D.

Preferably, the edge 81d extends along the entire extension of the body 81 orthogonally to the directions C and D. In addition, the edge 81d is arranged at a median region of the portion 81c along the direction C.

As shown in Figure 6, when the body 81 is operatively connected to the cage 29, the device 80 is comprised between the rings 21 and 22 in a radial direction with respect to the axis A. In addition, the direction C is parallel or substantially parallel to the axis A, the direction D is arranged radially to the axis A, the portion 81b is in contact with the ring 21 and the portion 81c is in contact with the ring 22.

More in detail, when the body 81 is fixed to the cage 29, the portion 81b is in abutment against the edge 21d and the face 21c and rested against the surface 21e; the portion 81c is in abutment against the face 22c and the edge 81d rests on the edge 22d (Figure 7).

The device 80 further comprises (Figure 8):
- a further hole 83 passing through the body 81 along the direction C and adapted to be at least partially aligned with the opening 36;
- a plug 84 adapted to engage at the same time the hole 83 and the opening 36, so as to constrain the body 81 to the cage 29.

In use, during rotation of the rotor 3 around the axis A, the regulation system 10 is controlled by the pilot to regulate the modulus and the direction of the thrust generated by the rotor 3. In particular, the rolling bearing 20 allows rotation of the swashplate 12 with respect to the swashplate 11.

The inspection method according to the present invention is described below.

In particular, in order to inspect the rolling bearing 20, it is necessary first to remove the gasket 43, making the cage 29 accessible from the outside.

Subsequently, the device 80 is positioned between the rings 21 and 22 on the side of the surfaces 21a and 22a. In detail, at first, the portions 81b and 81c are deformed, so that they approach each other along the direction D and are arranged so as to be facing respectively the faces 21c and 22c. Once positioned, the portions 81b and 81c are then released and therefore left to move elastically away from each other.

The body 81 is then fixed to the cage 29 in a manner that the hole 82 is aligned with the opening 31. In addition, in order to constrain the body 81 to the cage, the pin 84 is made to pass in succession through the hole 83 and the opening 36.

Once positioning of the device 80 is completed, the sensor 50 is inserted into the cavity 30 through the opening 31. In particular, the sensor 50 is then moved from the opening 31 to the cavity 30 by sliding the electric cable 51 in the direction oriented from the opening 31 to the cavity 30. In other words, the sensor 50 is a probe.

When the sensor 50 is positioned in the cavity 30, it is facing the raceways 25, 26, 27 and 28 and can therefore detect dimensional quantities and/or acquire images of said raceways 25, 26, 27, 28. In particular, the images acquired can be shown to the operator by means of the viewing means 70.

In order to allow the sensor 50 to acquire information relating to the raceways 25, 26, 27, 28 along their complete circumferential extension, the ring 22 is made to rotate with respect to the ring 21. Such rotation can be commanded manually, for example acting on the blades 7.

During rotation of the ring 22, the cage 29 also rotates with respect to the ring 21, dragging the body 81 by means of the pin 84.

In light of the quantities detected and/or the images acquired by the sensor 50, it is therefore possible to determine the presence of damage to the rolling bearing 20.

Said determination can be made by an operator, who analyses the quantities detected and/or the images acquired by the sensor 50 and applies a control criterion.

Alternatively, the determination can be made by the electronic control unit 60, which automatically processes the quantities detected and/or the images acquired by the sensor 50 and applies a control criterion.

In particular, the determination can be made by the electronic control unit 60 by means of the classification model determined and applied by the machine learning algorithm.

More in detail, the classification model is obtained by training the machine learning algorithm by means of training information.

The training information comprises a set of quantities and/or images of the rolling bearing 20 that is damaged or not. Furthermore, each piece of training information is associated with a respective label, which represents the presence or absence of damage in the rolling bearing 20.

For example, the machine learning algorithm is trained:
- by providing part of the training information available and the relative labels to the machine learning algorithm, so that the latter classifies each piece of training information and determines a classification model;
- by providing the remaining part of the training information available without the relative labels to the machine learning algorithm;
- by classifying said remaining part of the training information by means of the classification model;
- by assessing the accuracy of the classification model determined on the basis of the classification applied by the algorithm and of the labels associated with the remaining part of the training information; and
- by refining, if necessary, the classification model on the basis of the accuracy calculated, i.e. by re-training the classification model on the basis of the accuracy calculated.

After obtaining the classification model, it can be used to classify the quantities detected and/or the images acquired by the sensor 50 (not labelled), in order to assess the presence of damage to the rolling bearing 20.

The advantages which may be obtained are evident from an examination of the bearing 20, the inspection system 100 and the inspection method according to the dictates of the present invention.

In particular, since the cage 29 comprises the cavity 30, which can be engaged by the sensor 50 and is facing the rings 21 and 22, it is possible to detect the presence of damage to the rolling bearing 20 in a reliable and effective way.

In the first place, in fact, the inspection procedure that can be conducted thanks to the sensor 50 and to the presence of the cavity 30 allows a direct assessment of the surface roughness of the raceways 25, 26, 27, 28 to be performed.

In the second place, due to the fact that the sensor 50 detects the dimensional quantities or acquires the images of the raceways 25, 26, 27, 28, it is possible to make the assessment of the level of roughness of the raceways 25, 26, 27, 28 less subjective.

In the third place, thanks to the fact that detection of damage is performed by means of instrumentation and is not left solely to the tactile perception of the operator, it is possible to identify the presence of surface damage promptly and right from the initial phases of its identification.

Furthermore, it is possible to observe that inspection of the rolling bearing 20 can be performed without needing to remove the rolling bearing 20 from its seat.

Since the bodies 35a and 35b of the angular sector 35 are joined to each other, it is possible to ensure that the portion of the cavity 30 obtained in the body 35a is correctly aligned with the portion of the cavity 30 obtained in the body 35b. In this manner, it is possible to reduce the risks of misalignment in the circumferential direction with respect to the axis A, which could, on the other hand, occur in the other angular sectors 34.

Since the inspection system 100 comprises viewing means 70, the operator can directly and easily display the quantities detected and/or the images acquired by the sensor 50.

Since the sensor 50 comprises an interferometer, it is possible to detect the characteristics of the raceways 25, 26, 27, 28 in the three dimensions.

Since the presence of damage to the rolling bearing 20 can be determined by means of a machine learning algorithm, it is possible to make the assessment on the level of roughness of the raceways 25, 26, 27, 28 even less subjective. In addition, training of said machine learning algorithm allows the technical-practical knowledge of the operators to be recorded and maintained.

In conclusion, it is clear that changes and variants may be made to the rolling bearing 20, to the inspection system 100 and to the inspection method described and illustrated here without deviating from the scope of protection as defined by the claims.

In particular, the shape of the cavity 30 and the arrangement of the rolling bearings 23 and 24 could be varied to change the visibility of the raceways 25, 26, 27 and 28 compatibly with the function of the rolling bearing 20.

The cage 29 could comprise more than one cavity 30.

The cavity 30 could be facing only the ring 21 or only the ring 22.

The rolling bodies 23, 24 could have a different shape to the spherical one. For example, the rolling bodies 23, 24 could be cylindrical or conical.

The rolling bearing 20 could comprise a single crown 40, 41 or more than two crowns 40, 41.

The rolling bearing 20 could not form part of the regulation system 10, but form part of a regulation system associated with the tail rotor 4.

The rolling bearing 20 could form part of a transmission unit of the aircraft 1.

The aircraft 1 could not be a helicopter, but another aircraft capable of hovering, for example a powered-lift aircraft, an airship or a STOVL (Short Take-Off and Vertical Landing) aircraft.

The sensor 50 could be remotely operatively connected to the electronic control unit 60. In that case, the sensor 50 could be operatively connected to a guide and/or support cable, which is configured to support the sensor 50 during movements towards and away from the cavity 30, but that is electrically inactive.

The inspection system 100 could comprise a plurality of sensors 50. In detail, the inspection system 100 could comprise:
- a first sensor 50 configured to detect a dimensional quantity associated with the raceways 25 and 27 and/or to acquire images of the raceways 25 and 27;
- a second sensor 50 configured to detect a dimensional quantity associated with the raceways 26 and 28 and/or to acquire images of the raceways 26 and 28.

Alternatively, the inspection system 100 could comprise:
- a first sensor 50 configured to detect a dimensional quantity associated with the raceway 25 and/or to acquire images of the raceway 25;
- a second sensor 50 configured to detect a dimensional quantity associated with the raceway 26 and/or to acquire images of the raceway 26;
- a third sensor 50 configured to detect a dimensional quantity associated with the raceway 27 and/or to acquire images of the raceway 27; and
- a fourth sensor 50 configured to detect a dimensional quantity associated with the raceway 28 and/or to acquire images of the raceway 28.

In further detail, the inspection system 100 could comprise the same number of bodies 81 configured to guide and position the respective sensors 50 at respective different heights parallel to the axis A.

## Claims

1. Rolling bearing (20) comprising:
- a first ring (21) extending around an axis (A);
- a second ring (22) extending around said axis (A) and radially external to said first ring (20);
- a plurality of rolling bodies (23, 24) cooperating with said first and second ring (21, 22), so as to roll on respective raceways (25, 26, 27, 28) of said first and second rings (21, 22) and allow the relative rotation between said first and second rings (21, 22) around said axis (A); and
- a cage (29) configured to maintain said rolling bodies (23, 24) angularly distanced from each other around said axis (A); **characterised in that** said cage (29) comprises a cavity (30) configured to be selectively engaged, in use, by a sensor (50); said cavity (30) being at least partially facing said first ring (21) and/or said second ring (22).

2. The rolling bearing according to claim 1, wherein said cage (29) comprises:
- a first end (29a) and a second end (29b) arranged opposed to each other parallel to said axis (A);
- an opening (31) extending from one of said first end (29a) and said second end (29b) and said cavity (30);
said opening (31) being configured to allow, in use, access of said sensor (50) to said cavity (30).

3. The rolling bearing according to claim 1 or 2, comprising a first crown (40) of said rolling bodies (23) and a second crown (41) of said rolling bodies (24) distanced from each other parallel to said axis (A);
said rolling bodies (23) belonging to said first crown (40) being adapted to roll on a first said raceway (25) of said first ring (21) and on a second said raceway (27) of said second ring (22);
said rolling bodies (24) belonging to said second crown (41) being adapted to roll on a third said raceway (26) of said first ring (21) and on a fourth said raceway (28) of said second ring (22);
said cavity (30) being at least partially facing one or more of said first, second, third and fourth raceways (25, 26, 27, 28).

4. The rolling bearing according to claims 2 and 3, wherein said cage (29) comprises a plurality of angular sectors (34, 35) positioned alongside each other in a circumferential arrangement around said axis (A); wherein at least one (35) of said angular sectors (34, 35) comprises:
- a first body (35a) arranged on the side of said first end (29a) and comprising first alveoli (33); each of said first alveoli (33) comprising a respective rolling body (24) belonging to said second crown (41);
- a second body (35b) arranged on the side of said second end (29b) and comprising second alveoli (32); each of said second alveoli (32) comprising a respective rolling body (23) belonging to said first crown (41);
said cavity (30) extending in part at said first body (35a) and in part at said second body (35b);
said first body and second body (35a, 35b) being joined to each other and at least partially aligned with each other in a circumferential arrangement around said axis (A).

5. Assembly (10) for an aircraft (1) capable of hovering; said assembly (10) comprising:
- a first body (11) rotationally fixed to an axis (A);
- a second body (12) rotating with respect to said axis (A);
- a rolling bearing (20) radially interposed between said first body (11) and said second body (12) with respect to said axis (A); said rolling bearing (20) being configured to allow the rotation of said second body (12) with respect to said first body (11) around said first axis (A), and being obtained according to any one of the preceding claims.

6. The assembly according to claim 5, **characterised in that** it is a regulation system (10) of the modulus and the direction of thrust generated, in use, by a rotor (3) of said aircraft (1); wherein said first body (11) and said second body (12) comprise respective swashplates (11, 12); and/or **characterised in that** it is a transmission unit for said aircraft (1).

7. An aircraft (1) capable of hovering and comprising an assembly (10) according to claim 5 or 6.

8. An inspection system (100) for a rolling bearing (20); said rolling bearing (20) comprising:
- a first ring (21) extending around an axis (A);
- a second ring (22) extending around said axis (A) and radially external to said first ring (21);
- a plurality of rolling bodies (23, 24) cooperating with said first and second ring (21, 22), so as to roll on respective raceways (25, 26, 27, 28) of said first and second rings (21, 22) and allow the relative rotation between said first and second rings (21, 22) around said axis (A); and
- a cage (29) configured to maintain said rolling bodies (23, 24) angularly distanced from each other around said axis (A);
said cage (29) comprising a cavity (30) at least partially facing said first ring (21) and/or said second ring (22);
said inspection system (100) being **characterised in that** it comprises:
- at least one sensor (50) adapted to be selectively housed, in use, in said cavity (30); said sensor (50) being configured to detect a dimensional quantity associated with said raceways (25, 26, 27, 28) and/or to acquire images of said raceways (25, 26, 27, 28) and to generate a corresponding signal; and
- an electronic control unit (60) operatively connected to said sensor (50) and configured to receive said signal.

9. The inspection system according to claim 8, comprising viewing means (70) wearable by an operator and operatively connected to said electronic control unit (60); said viewing means (70) being configured to show to the operator the images acquired and/or said dimensional quantity detected, in use, by said sensor (50) and/or information correlated to said acquired images and/or to said detected quantity; and/or wherein said sensor (50) comprises at least one among a video camera, a profilometer, an interferometer and a microscope.

10. The inspection system according to claim 8 or 9, comprising:
- an electric cable (51), that electrically connects said sensor (50) to said electronic control unit (60) or a support cable configured to support said sensor (50);
- a device (80) adapted to guide the insertion of said sensor (50) and/or said electric cable (51) and/or said support cable into said cavity (30);
said device (80) comprising:
- a body (81) adapted to be fixed to said cage (29);
- a hole (82) passing through said body (81) and adapted to be at least partially aligned with an opening (31) of said cage (29); said opening (31) extending from an end (29a, 29b) of said cage (29) parallel to said axis (A) to said cavity (30).

11. An inspection method of a rolling bearing (20); said rolling bearing (20) comprising:
- a first ring (21) extending around an axis (A);
- a second ring (22) extending around said axis (A) and radially external to said first ring (21);
- a plurality of rolling bodies (23, 24) cooperating with said first and second ring (21, 22), so as to roll on respective raceways (25, 26, 27, 28) of said first and second rings (21, 22) and allow the relative rotation between said first and second rings (21, 22) around said axis (A); and
- a cage (29) configured to maintain said rolling bodies (23, 24) angularly distanced from each other around said axis (A); said method being **characterised by** comprising the steps of:
i) inserting a sensor (50) into a cavity (30) of said cage (29); said cavity (30) being at least partially facing said first ring (21) and/or said second ring (22);
ii) detecting a dimensional quantity associated with said raceways (25, 26, 27, 28) and/or acquiring images of said raceways (25, 26, 27, 28) by means of said sensor (50);
iii) determining the presence of damage to said rolling bearing (20) on the basis of said dimensional quantity and/or said acquired images.

12. The inspection method according to claim 11, wherein during step ii), one of said first ring (21) and said second ring (22) is rotated around said axis (A).

13. The inspection method according to claim 11 or 12, wherein step i) comprises, in turn, the steps of:
iv) fixing a body (81) of a device (80) to said cage (29) so that a hole (82) of said body (81) is at least partially aligned with an opening (31) of said cage (29); said opening (31) extending from a first end (29a) or from a second end (29b) of said cage (29) to said cavity (30); said first end (29a) and said second end (29b) being opposite to each other parallel to said axis (A);
v) inserting said sensor (50) into said hole (82); said sensor (50) being connected to an electric cable (51) or to a support cable;
vi) sliding said electric cable (51) or said support cable in the direction oriented by said opening (31) to said cavity (30), up until achieving the insertion of said sensor (50) into said cavity (30).

14. The inspection method according to any one of claims 11 to 13, wherein said step iii) comprises the steps of:
vii) receiving said dimensional quantity and/or said acquired images;
viii) processing said dimensional quantity and/or said acquired images to classify said dimensional quantity and/or said acquired images in one or more classes; said one or more classes comprising:
- a first class indicative of the presence of damage to said rolling bearing (20); and
- a second class indicative of the absence of damage to said rolling bearing (20); and
ix) determining the presence of damage to said rolling bearing (20) on the basis of a classification in one or more classes of said dimensional quantity and/or said acquired images; wherein said steps vii), viii) and ix) are performed by means of an electronic control unit (60); said sensor (50) being operatively connected to said control unit (60).

15. The inspection method according to claim 14, wherein step viii) comprises applying at least one predetermined classification model to said dimensional quantity and/or said acquired images; said at least one predetermined classification model being determined and applied by a machine learning algorithm.
